# EUROPEAN PATENT APPLICATION

(11) **EP 1 470 860 A1**
(43) Date of publication of application: **27.10.2004**
(21) Application number: 03703087.1
(22) Date of filing: 30.01.2003
(51) Int. Cl.: B01J 29/08, C10G 11/05, C10G 11/18

(54) **CATALYST FOR FLUID CATALYTIC CRACKING OF HEAVY HYDROCARBON OIL AND METHOD OF FLUID CATALYTIC CRACKING**

(30) Priority: 31.01.2002 JP 2002023644
(71) Applicant: Petroleum Energy Center, Tokyo 105-0001 (JP); COSMO OIL CO., LTD, Minato-ku, Tokyo 105-8528 (JP)
(72) Inventor: YAMADA, Hidenori, Cosmo Oil Co., Ltd.,R&D Center, Satte-shi, Saitama 340-0193 (JP); SHIBUYA, Tadashi, Cosmo Oil Co., Ltd., R&D Center, Satte-shi, Saitama 340-0193 (JP); SEKINE, Nobuki, Cosmo Oil Co., Ltd., R&D Center, Satte-shi, Saitama 340-0193 (JP)
(74) Representative: HOFFMANN - EITLE
(86) International application number: PCT/JP2003/000911
(87) International publication number: WO 2003/064038

(57) **Abstract**

A catalyst for fluidized catalytic cracking of a heavy hydrocarbon oil, which comprises (A) catalyst particles comprising a compound of a bivalent metal or a compound of bivalent and trivalent metals, wherein said compound shows an XRD pattern of a carbonate of the bivalent metal, and (B) catalyst particles comprising a crystalline aluminosilicate zeolite and a mixture compound of aluminum and at least one metal selected from the group consisting of the Group IVa metals of the Periodic Table.

## Description

### Technical Field

The present invention relates to a catalyst for fluidized catalytic cracking (hereinafter sometimes referred to as "FCC") of a heavy hydrocarbon oil and a method of FCC of a heavy hydrocarbon oil with the catalyst. More particularly, the invention relates to an FCC catalyst which deactivates catalyst poison metals contained in the oil, e.g., nickel and vanadium, reduced the amount of hydrogen or coke yielded, has excellent cracking activity and bottom oil-treating ability, and can yield a gasoline and an LCO fraction in high yields without lowering the octane number, and relates to an FCC method using the catalyst.

### Background Art

Recently, in the catalytic cracking of hydrocarbon oils, there is a desire to upgrade a less expensive feedstock hydrocarbon oil of lower quality, and there is an increasingly growing tendency for feedstock hydrocarbon oils to become heavier.

Heavy feedstock hydrocarbon oils contain a large amount of metals such as nickel, vanadium and the like, and the metals almost wholly deposit on the catalyst.

In particular, it is known that when vanadium deposits and accumulates on the catalyst, it destroys the crystal structure of the crystalline aluminosilicate zeolite which is an active ingredient of the catalyst and hence a considerable decrease in catalytic activity is brought out and the amount of hydrogen and coke yielded is increased.

On the other hand, it is known that nickel causes catalytic dehydrogenation upon deposition and accumulation on the catalyst surface and hence increases the amount of hydrogen and coke yielded and, as a result, nickel causes problems that the regeneration tower temperature is elevated and so forth.

When a large amount of a heavy bottom oil (e.g., Atmospheric residue or Vacuum residue) is used as a feedstock hydrocarbon oil, not only the influences of these metals become greater but also the treated amount of bottom oils increases, which leads to an increase in catalyst makeup amount and causes problems of an increase in catalyst cost and an increase in the amount of waste catalysts.

Heretofore, in order to deactivate poison metals such as vanadium deposited on a catalyst, various techniques in which a basic compound or the like is incorporated into the catalyst as a metal deactivator and thereby the metal resistance of the catalyst is improved have been proposed.

Examples include a technique in which a water-soluble compound of an alkaline earth metal or the like is incorporated into an inorganic oxide matrix together with a crystalline aluminosilicate zeolite, a technique in which an alkaline earth metal or the like is ion-exchanged with a crystalline aluminosilicate zeolite, and a technique in which a water-insoluble oxide (e.g., dolomite, sepiolite, an anion clay, or the like) is incorporated into an inorganic oxide matrix (JP-A-62-57652, JP-A-63-182031, JP-A-3-293039, etc.).

Although the compounds of alkaline earth metals have the effect of deactivating poison metals, they have no cracking ability when used alone. Consequently, they are used after having been incorporated as a metal deactivator into an inorganic oxide matrix together with a crystalline aluminosilicate having a cracking ability, as described above. In the catalyst, however, the alkaline earth metal (particularly, magnesium compound, etc.) migrates as a low-melting compound during the catalytic cracking reaction and destroys the crystal structure of the crystalline aluminosilicate zeolite owing to its basic nature, so that the thermal stability is lowered.

Moreover, as described above, in the case of the catalyst in which an alkaline earth metal is incorporated by ion-exchange with a crystalline aluminosilicate zeolite or the like, the octane number (RON) of the gasoline product obtained by the catalytic cracking reaction is lowered.

Furthermore, in the case of using an anion clay, since a natural product is rare, the catalyst cost becomes extremely high, while the synthetic one is also not so inexpensive and hence the catalyst cost becomes high.

Moreover, with regard to nickel which accumulates on the catalyst surface, since the metal deactivators described above often exhibit no deactivating effect thereon, a technique of feeding a specific antimony compound (organoantimony, etc.) to a feedstock hydrocarbon oil to thereby deactivate the nickel deposited on the catalyst surface has been proposed (JP-A-63-63688, JP-A-1-213399, etc.). However, in the method, the antimony compound sometimes accumulates as a metallic antimony deposit (low-melting compound having a melting point of 500 to 700°C) on the slide valve and the like in an FCC apparatus.

Furthermore, a technology of carrying out the fluidized catalytic cracking of a heavy hydrocarbon containing nickel by the use of a catalyst containing an alumina having a specific crystallinity (bayerite or η-alumina) is proposed (JP-A-2-277548). In this method, however, the formation of hydrogen and coke was suppressed by deactivation of nickel but the cracking activity is decreased.

On the other hand, for the purpose of improving the cracking activity, a technology of introducing the activity into an inorganic oxide matrix by the use of silica-alumina, γ-alumina, or the like as the matrix is proposed. In the method, however, the formation of undesirable products, i.e., hydrogen and coke increases.

### Disclosure of the Invention

Recently, it has been desired to develop an FCC catalyst which further improves the conversion and also reduces the generation of hydrogen and coke.

Therefore, an object of the present invention is to provide an FCC catalyst which efficiently deactivates catalyst poison metals contained in feedstock heavy hydrocarbon oils, has excellent cracking activity and bottom oil-treating ability, reduces the amount of hydrogen or coke yielded, and can yield a gasoline and an LCO fraction in high yields without lowering the octane number, and an FCC method using the catalyst.

As a result of intensive studies for achieving the above object, the present inventors have found that when a catalyst is constituted by the combination of a compound of a bivalent metal or a compound of bivalent and trivalent metals showing a certain XRD pattern and a mixture compound of aluminum and one of the Group IVa metals of the Periodic Table and also the mixture compound is used under a certain condition, catalyst poison metals contained in a feedstock oil, such as nickel, vanadium and the like, can be efficiently deactivated, and thereby the above object can be suitably achieved. Accordingly, the present invention has been accomplished.

Namely, the invention has the following constitution.
(1) A catalyst for fluidized catalytic cracking of a heavy hydrocarbon oil, which comprises:
   (A) catalyst particles comprising a compound of a bivalent metal or a compound of bivalent and trivalent metals, wherein said compound shows an XRD pattern of a carbonate of the bivalent metal, and
   (B) catalyst particles comprising a crystalline aluminosilicate zeolite and a mixture compound of aluminum and at least one metal selected from the group consisting of the Group IVa metals of the Periodic Table.
(2) The catalyst according to the above (1), wherein (A) the catalyst particles consist of the compound of the component (A).
(3) The catalyst according to the above (1), wherein (A) the catalyst particles are catalyst particles comprising the compound of the component (A) dispersed in an inorganic oxide matrix.
(4) The catalyst according to the above (1), wherein (A) the catalyst particles are catalyst particles comprising the compound of the component (A) and a crystalline aluminosilicate zeolite dispersed in an inorganic oxide matrix.
(5) The catalyst according to any one of the above 1 to 4, wherein (B) the catalyst particles are catalyst particles comprising the mixture compound of (B) and a crystalline aluminosilicate zeolite dispersed in an inorganic oxide matrix.
(6) A catalyst for fluidized catalytic cracking of a heavy hydrocarbon oil, which comprises catalyst particles comprising:
   (A) a compound of a bivalent metal or a compound of bivalent and trivalent metals, showing an XRD pattern of a carbonate of the bivalent metal,
   (B) a mixture compound of aluminum and at least one metal selected from the group consisting of the Group IVa metals of the Periodic Table, and
   (C) a crystalline aluminosilicate zeolite.
(7) The catalyst according to the above (6), wherein the catalyst particles are catalyst particles comprising the compounds (A) to (C) dispersed in an inorganic oxide matrix.
(8) The catalyst according to any one of the above (1) to (7), wherein in the compound of the component (A), the bivalent metal is at least one selected from the group consisting of Mn²⁺, Ca²⁺, Sr²⁺, Ba²⁺ and Sn²⁺, and the trivalent metal is at least one selected from the group consisting of Al³⁺ and Mn³⁺.
(9) The catalyst according to any one of the above (1) to (8), wherein in the mixture compound of (B) the component, the Group IVa metal of the Periodic Table is at least one selected from the group consisting of Zr and Ti.
(10) The catalyst according to any one of the above (1) to (9), wherein the compound of the component (A) is calcium carbonate.
(11) A method of fluidized catalytic cracking of a heavy hydrocarbon oil, which comprises using the catalyst according to any one of the above (1) to (10).
(12) The method according to the above (11), which further uses a catalyst for fluidized catalytic cracking obtainable by dispersing a crystalline aluminosilicate zeolite in an inorganic oxide matrix.

### Best Mode for Carrying Out the Invention

The following will describe the invention in detail.

In the catalyst of the invention, both of the compound of (A) and the mixture compound of (B) do not have cracking activity to crack hydrocarbon oils but, by the combined action of both compounds, exhibit an function of efficiently and considerably deactivating catalyst poison metals such as nickel and vanadium. Therefore, for use in fluidized catalytic cracking of heavy hydrocarbon oils, it is necessary to use a crystalline aluminosilicate zeolite having cracking activity of hydrocarbon oils.

Moreover, the compound of (A) can be used either a usage form as a so-called additive type catalyst in which catalyst particles are formed from the compound alone or by dispersing it in an inorganic oxide matrix or a usage form as a so-called one-body type catalyst in which catalyst particles are formed together with a crystalline aluminosilicate zeolite.

On the other hand, the mixture compound of (B) does not exhibit the function of deactivating catalyst poison metals in a usage form as an additive type catalyst in which catalyst particles are formed from the mixture compound alone or by dispersing it in an inorganic oxide matrix but exhibits the function of deactivating catalyst poison metals in a usage form as a one-body type catalyst in which catalyst particles are formed together with a crystalline aluminosilicate zeolite, so that it is necessary to use it in the usage form as the one-body type catalyst.

In addition, the catalyst of the invention can be used in combination with a conventional usual FCC catalyst in which catalyst particles are formed by dispersing a crystalline aluminosilicate zeolite in an inorganic oxide matrix. This combined use thereof with the conventional usual FCC catalyst is also included in the usage forms of the catalyst of the invention.

Thus, in the above usage forms, the catalyst of the invention, by the combined action of the compound of (A) and the mixture compound of (B), efficiently and considerably deactivates catalyst poison metals and maintains excellent cracking activity and bottom oil-treating ability of the crystalline aluminosilicate zeolite without reducing the activity and ability. As a result, the amount of hydrogen or coke yielded can be reduced and a gasoline and an LCO fraction can be obtained in high yields without lowering the octane number.

The desired objects of the invention cannot be achieved when only one of the compound of (A) and the mixture compound of (B) is used or only one of aluminum and at least one metal selected from the Group IVa metals of the Periodic Table is used.

In order to achieve the desired objects of the invention, it is of importance to use both of the compound of (A) and the mixture compound of (B) and to use both of aluminum and at least one metal selected from the Group IVa metals of the Periodic Table as the mixture compound of (B).

The following will be mentioned as embodiments for specifically carrying out the above individual usage forms of the compound of (A) and the mixture compound of (B) as well as the crystalline aluminosilicate zeolite to be coexisted.

The first one is an embodiment wherein the compound of (A) singly forms catalyst particles or is dispersed in an inorganic oxide matrix to form catalyst particles and the mixture compound of (B) is dispersed in an inorganic oxide matrix together with an crystalline aluminosilicate zeolite to form catalyst particles (hereinafter referred to as "Embodiment 1").

The other one is an embodiment wherein the compound of (A) is dispersed in an inorganic oxide matrix together with an crystalline aluminosilicate zeolite to form catalyst particles and the mixture compound of (B) is dispersed in an inorganic oxide matrix together with an crystalline aluminosilicate zeolite to form catalyst particles (hereinafter referred to as "Embodiment 2").

The still other one is an embodiment wherein the compound of (A) and the mixture compound of (B) are dispersed in an inorganic oxide matrix together with an crystalline aluminosilicate zeolite to form catalyst particles (hereinafter referred to as "Embodiment 3").

In the above each embodiment, it is suitable that each catalyst particles to be formed generally have an average particle size of 50 to 90 µm and a bulk density of 0.3 to 1.2 g/ml.

Therefore, in the case that the compound of (A) singly forms catalyst particles in Embodiment 1, the average particle size of the compound is suitably from 50 to 90 µm but in the case that the compound of (A) is dispersed in an inorganic oxide matrix to form catalyst particles, the average particle size of the solid compound of (A) is suitably from 0.1 to 15 µm for achieving the average particle size of the catalyst particles of 50 to 90 µm.

Also, in the above each embodiment, the contents of the above individual catalyst ingredients in the catalyst particles and the use ratio of individual catalyst particles in the case that an inorganic oxide matrix is used for the formation of individual catalyst particles can be suitably determined according to the necessity, but the following contents of the individual catalyst ingredients and the use ratio of individual catalyst particles are preferable.

Namely, in the above Embodiment 1, in the case that the compound of (A) is dispersed in an inorganic oxide matrix to form catalyst particles, the content of the compound of (A) in the catalyst particles is preferably 10% by weight or more, more preferably 20% by weight or more on a dry basis. When the content of the compound of (A) is 10% by weight or more, a desired catalyst poison metal-deactivating ability can be achieved to maintain the activity of the crystalline aluminosilicate zeolite and to invite no increase of the amount of hydrogen and coke yielded as undesirable products, and hence the case is preferable.

With regard to the contents of the mixture compound of (B) and the crystalline aluminosilicate zeolite in the catalyst particles, the content of the mixture compound of (B) is preferably from 0.01% to 20% by weight, more preferably 0.5% to 10% by weight on a dry basis and that of the crystalline aluminosilicate zeolite is preferably from 5% to 60% by weight, more preferably 15% to 45% by weight.

When the content of the mixture compound of (B) is 0.01% by weight or more, a desired catalyst poison metal-deactivating ability can be achieved to maintain the activity of the crystalline aluminosilicate zeolite and to invite no increase of the amount of hydrogen and coke yielded as undesirable products, and hence the case is preferable. Also, the content of 20% by weight or less is preferable because the content of zeolite as the active ingredient is relatively maintained and a high cracking activity is achieved.

When the content of the crystalline aluminosilicate zeolite falls within the above range, a desired cracking activity can be achieved and the content of the mixture compound of (B) and the amount of the inorganic oxide matrix are relatively maintained, a desired catalyst poison metal-deactivating ability can be easily achieved, and the strength of the catalyst particles is maintained, so that the case is preferable.

Moreover, with regard to the use ratio of the individual catalyst particles, based on the total weight, i.e., 100 parts by weight of the compound of (A), the mixture compound of (B) and the crystalline aluminosilicate zeolite and the inorganic oxide matrix, preferable is the ratio comprising from 0.01 to 20 parts by weight of the compound of (A), from 0.01 to 20 parts by weight of the mixture compound of (B), and from 5 to 60 parts by weight of the crystalline aluminosilicate zeolite.

More preferable is the ratio comprising from 0.5 to 10 parts by weight of the compound of (A), from 0.5 to 10 parts by weight of the mixture compound of (B), and from 15 to 45 parts by weight of the crystalline aluminosilicate zeolite.

When the ratio of the compound of (A) and the mixture compound of (B) falls within the above range, a desired catalyst poison metal-deactivating ability can be achieved to maintain the activity of the crystalline aluminosilicate zeolite and to invite no increase of the amount of hydrogen and coke yielded as undesirable products and an effect of deactivating catalyst poison metals can be easily obtained, so that the case is preferable.

When the ratio of the crystalline aluminosilicate zeolite falls within the above range, a desired cracking activity can be achieved, the ratio of the crystalline aluminosilicate zeolite and the mixture compound of (B) is relatively maintained, and a desired catalyst poison metal-deactivating ability can be easily achieved, so that the case is preferable.

Also, in the above Embodiment 2, with regard to the contents of the compound of (A) and the crystalline aluminosilicate zeolite in the catalyst particles, the content of the compound of (A) is preferably from 10% to 70% by weight, more preferably 20% to 50% by weight on a dry basis and that of the crystalline aluminosilicate zeolite is preferably from 5% to 60% by weight, more preferably 15% to 45% by weight.

When the content of the compound of (A) falls within the above range, as in the case of the above Embodiment 1, a desired catalyst poison metal-deactivating ability can be achieved to maintain the activity of the crystalline aluminosilicate zeolite and to invite no increase of the amount of hydrogen and coke yielded as undesirable products and an effect of deactivating catalyst poison metals can be easily obtained, so that the case is preferable.

When the content of the crystalline aluminosilicate zeolite falls within the above range, a desired cracking activity can be achieved and the content of the compound of (A) and the amount of the inorganic oxide matrix are relatively maintained, a desired catalyst poison metal-deactivating ability can be easily achieved, and the strength of the catalyst particles is maintained, so that the case is preferable.

Moreover, the contents of the mixture compound of (B) and the crystalline aluminosilicate zeolite are the same as in the case of the above Embodiment 1. In addition, the use ratio of the individual catalyst ingredients are also the same as in the case of the above Embodiment 1.

Furthermore, in the above Embodiment 3, with regard to the contents of the compound of (A), the mixture compound of (B), and the crystalline aluminosilicate zeolite in the catalyst particles, on a dry basis, the content of the compound of (A) is preferably from 0.01% to 20% by weight, more preferably 0.5% to 10% by weight, that of the mixture compound of (B) is preferably from 0.01% to 20% by weight, more preferably 0.5% to 10% by weight, and that of the crystalline aluminosilicate zeolite is preferably from 5% to 60% by weight, more preferably 15% to 45% by weight.

When the contents of the compound of (A) and the mixture compound of (B) fall within the above ranges, a desired catalyst poison metal-deactivating ability can be achieved to maintain the activity of the crystalline aluminosilicate zeolite and to invite no increase of the amount of hydrogen and coke yielded as undesirable products and an effect of deactivating catalyst poison metals can be easily obtained, so that the case is preferable.

When the content of the crystalline aluminosilicate zeolite falls within the above range, a desired cracking activity can be achieved and the contents of the compound of (A) and the mixture compound of (B) and the amount of the inorganic oxide matrix are relatively maintained, a desired catalyst poison metal-deactivating ability can be easily achieved, and the strength of the catalyst particles is maintained, so that the case is preferable.

The following will describe each of the above compound of (A) and mixture compound of (B).

As the above compound of (A), a compound of a bivalent metal or a compound of bivalent and trivalent metals showing an XRD pattern of a carbonate of the bivalent metal (hereinafter abbreviated as "compound of bivalent and trivalent metals") which does not possess peaks of an anion clay or the like is used.

The bivalent and trivalent metals are not particularly limited and various bivalent and trivalent metals can be used. Examples of the bivalent metal include Mg²⁺, Mn²⁺, Ca²⁺, Sr²⁺, Ba²⁺, Sn²⁺, and Zn²⁺ and of these, Mn²⁺, Ca²⁺, Sr²⁺, Ba²⁺, and Sn²⁺ are preferable. Examples of the trivalent metal include Al³⁺, Fe³⁺, Cr³⁺, Co³⁺, La³⁺, Mn³⁺, Ti³⁺, Ga³⁺, Sb³⁺, and Bi³⁺ and of these, Al³⁺ and Mn³⁺ are preferable. In particular, Al³⁺ is most suitable since a high surface area is obtained.

In the above compound of a bivalent metal or compound of bivalent and trivalent metals, the above each metal may be used singly or in a free combination of two or more.

Namely, the bivalent metal compound may be a compound of only one of the bivalent metals described above, or may be a composite compound of two or more of the metals in combination. In this case, the metals may be mixed in any proportion. Moreover, two or more different bivalent metal compounds can be used in combination and the compounds may be mixed in any proportion.

In the case of the compound of bivalent and trivalent metals, the combined use of Al³⁺ and at least one selected from Mn²⁺, Ca²⁺, Sr²⁺, Ba²⁺, and Sn²⁺ is particularly effective for deactivation of catalyst poison metal because nickel oxide and vanadium oxide are efficiently adsorbed. In the compound, the bivalent metals may be mutually mixed in any proportion in the case of the combination of two or more bivalent metals, or the trivalent metals may be mutually mixed in any proportion in the case of the combination of two or more trivalent metals. The proportion of the bivalent metal and the trivalent metal is preferably a molar ratio of bivalent metal/trivalent metal of 0.5 to 10, more preferably a molar ratio thereof of 2 to 5.

Moreover, two or more compounds having different bivalent metals or different trivalent metals or different bivalent metals and different trivalent metals can be used in combination and the compounds may be mixed in any proportion.

In the formation of catalyst particles of the above compound(s), in the case that alumina is used as the inorganic oxide matrix, a bivalent metal compound in which any one or two or more of Ca²⁺, Sr²⁺, and Ba²⁺ are used as bivalent metals is preferable because of a high catalyst poison metal-deactivating ability.

The compound of a bivalent metal or compound of bivalent and trivalent metals shows an XRD pattern of a carbonate of the bivalent metal and specific examples of the carbonate salt include calcium carbonate, strontium carbonate, barium carbonate and the like. In particular, calcium carbonate is most preferable because it has a lower absolute density than strontium carbonate and barium carbonate and hence it prevents the finished catalyst from having an increased bulk density and makes catalyst preparation easy, as well as calcium carbonate is innocuous, easy to handle, and available at a low price.

The carbonate to be used may be prepared by any known method. For example, commercially available carbonates of the metals to be used may be employed singly or as a mixture, or a slurry of a crystalline carbonate obtained by mixing an aqueous solution of a water-soluble salt of a bivalent metal to be used with an aqueous solution of an alkali carbonate and regulating the pH thereof may be employed, or dried or burned one of the resulting carbonate slurry may be employed.

However, in any of the processes of the preparation, when it is dispersed in an inorganic oxide matrix, it is preferable to regulate the average particle size of the solid particles to the range of 0.1 to 15 µm beforehand.

The average particle size of the solid particles of 15 µm or less is desirable because, when the solid particles are dispersed in an inorganic oxide matrix to form catalyst particles, the resulting catalyst particles can maintain the desired average particle size or bulk density. The average particle size of 0.1 µm or more is preferable because it is easy to handle.

As the above mixture compound of (B) for use in the invention, a mixture compound comprising aluminum and at least one metal selected from among the Group IVa metals of the Periodic Table can be employed.

As the Group IVa metal of the Periodic Table in the mixture compound, any of the Group IVa metals of the Periodic Table can be used but Zr and Ti are mentioned as preferable examples. In particular, Zr is preferably used.

The mixture compound in the invention means a compound in a state wherein at least one of the Group IVa metals and aluminum are mixed with each other at a molecular level. The mixture compound can be obtained as a co-precipitate by using, as a starting material, a mixture of an aqueous solution of a water-soluble Group IVa metal compound and an aqueous solution of an aluminum compound and subjecting it to a treatment to accelerate deposition, such as pH control. The co-precipitate can be used for preparation of catalyst particles without further treatment or after drying or burning. Moreover, the mixture compound can be obtained by physically mixing individual metals or compounds such as oxides of the Group IVa metals and aluminum and then burning the mixture at a high temperature around individual melting points or treating them with a chemical substance capable of dissolving individual ingredients. The mixture compound (B) of the invention is preferably obtained by the method of obtaining it as a co-precipitate from the above aqueous solution.

The mixture compound is clearly distinguished from one obtained by simply physically mixing individual metals or compounds such as oxides of the Group IVa metals and aluminum with each other, because the mixture compound is a mixture at a molecular level. In addition, the mixture compound may be in any of various forms such as composite oxides, composite hydroxides, composite sulfates, and composite carbonates and particularly, the forms of composite oxides and composite hydroxides are preferable.

Moreover, in the case that the mixture compound of a Group IVa metal compound and an aluminum compound is analyzed on an XRD pattern, it is preferable that the Group IVa metal compound and the aluminum compound are not separately crystallized. This is because aluminum and the Group IVa metal are in a state that they are mixed at a molecular level and are considered not to form any crystal structure owing to distorted structures. Also, this shows that aluminum and the Group IVa metal interact with each other, and hence it is presumed that aluminum exhibits a property of an solid acid (an active site of catalyst) different from simple alumina although the details are unknown.

In this regard, in the method of obtaining the mixture compound by the co-precipitating process, the aqueous solution of the Group IVa metal and the aqueous solution of the aluminum compound are preferably mixed at a pH of 9 or lower, preferably 7 or lower, more preferably 3 to 5, further more preferably 3 to 4. When the pH is 9 or lower, individual metals neither aggregate nor separately crystallize and the activity is maintained without any change of the properties, so that the case is preferable.

Moreover, the gel concentration of the mixture compound in which the Group IVa metal compound and the aluminum compound is mixed is preferably from 2 to 7%, more preferably from 3 to 6%. The gel concentration of the mixture compound of 2% or more is preferable because of good productivity of the mixture compound. Also, the concentration of 7% or less is preferable because the Group IVa metal compound and the aluminum compound do not crystallize separately and the activity is maintained.

In this connection, the gel concentration herein is a value obtained by dividing the total amount of the oxide-converted weight of the Group IVa metal and aluminum by the total amount of charged amounts of the starting materials (inclusive of diluted sulfuric acid added for pH control) and the weight of water.

Furthermore, the aging temperature at the mixing of the Group IVa metal compound and the aluminum compound is preferably from room temperature to 70°C, more preferably form 40 to 70°C. The aging temperature of 70°C or lower is preferable because the Group IVa metal compound and the aluminum compound do not crystallize separately and the temperature of room temperature or higher is preferable because cooling is substantially unnecessary and thus good productivity is achieved.

In addition, a mixed hydroxide slurry can be used, which is obtained by mixing commercially available water-soluble salts of individual metals to be used as aqueous solutions and subjecting the mixture to a treatment such as pH control as described above. The mixed hydroxide slurry can be used for preparation of catalyst particles without further treatment, or the mixed hydroxide slurry can be used for preparation of catalyst particles after drying or burning. At that time, as the water-soluble salt of each metal, nitrate salts, sulfate salts, carbonate salts, and the like can be used.

However, in any of the processes of the preparation, when it is dispersed in an inorganic oxide matrix, it is preferable to regulate the average particle size of the solid particles to the range of 0.1 to 15 µm beforehand as in the case of the above compound of (A).

The average particle size of the solid particles of 15 µm or less is desirable because, when the solid particles are dispersed in an inorganic oxide matrix to form catalyst particles, the resulting catalyst particles can maintain the desired average particle size or bulk density. The average particle size of 0.1 µm or more is preferable because it is easy to handle.

As the inorganic oxide matrix for use in the invention, known inorganic oxides used in ordinary cracking catalysts, such as silica, silica-alumina, alumina, silica-magnesia, alumina-magnesia, phosphorus-alumina, silica-zirconia, silica-magnesia-alumina and the like, can be employed. A clay such as kaolin, halloysite, montmorillonite or the like may be mixed with the inorganic oxides.

When calcium carbonate is used as the above compound of (A), the usage mode of calcium carbonate is preferably Embodiment 1 or 2, more preferably Embodiment 1.

As the crystalline aluminosilicate zeolite for use in the invention, various zeolites such as zeolites X, zeolites Y, zeolites β, mordenite, zeolites ZSM, natural zeolites and the like can be used.

Similar to the conventional ordinary FCC catalysts, the zeolites can be used in a form ion-exchanged with a cation selected from hydrogen, ammonium, rare-earth metals and polyvalent metals. The ion-exchange can be carried out prior to the preparation of catalyst particles or after the preparation of catalyst particles.

Among the above various zeolites, zeolites Y are preferably used, and zeolite USY (ultra-stable zeolite Y), which has an excellent hydrothermal stability, is more preferably used. Examples of zeolite USY include zeolites USY having specific structures, which are described in Japanese Patent Nos. 2544317, 2547141 and 2549332, and.JP-A-2000-233920 and which are obtained by applying a certain thermal treatment onto zeolites Y.

Among the above zeolites USY, particularly preferably used is a crystalline aluminosilicate zeolite having a unit lattice size of 24.50 angstrom or less, an alkali metal content of 0.1% by weight to 5.0% by weight in terms of oxide, an area ratio in Gauss' functional analysis of Si(2Al) peak relative to the total of whole peak areas in ²⁹Si-MASNMR spectrum of 10% or more, and main X-ray diffraction pattern of zeolite Y, as described in JP-A-2000-233920.

In the invention, the catalyst particles can be prepared by any of the known methods for preparing catalyst particles. In general, the catalyst particles can be prepared by preparing a mixture slurry of essential catalyst ingredients selected from the compound of (A), the mixture compound of (B), the crystalline aluminosilicate zeolite and the inorganic oxide matrix depending on the above embodiment, spray-drying the mixture slurry in a usual manner, and washing the resulting particles if necessary, followed by drying them or drying/burning them.

Moreover, in the invention, at the preparation of the catalyst particles, the other ingredient can be added in addition to the above essential catalyst ingredients as in the case of the conventional usual FCC catalysts. The ingredient to be added is not particularly limited and alumina, silica-alumina and the like can be suitably selected.

Furthermore, in the invention, it is possible to incorporate a compound showing an XRD pattern of a fluoride salt of a bivalent or trivalent metal.

As the bivalent and trivalent metals in the fluoride salt of a bivalent or trivalent metal, it is possible to use all the bivalent and trivalent metals. However, the bivalent metal is preferably at least one selected from the group consisting of Be²⁺, Mg²⁺, Mn²⁺, Ca²⁺, Sr²⁺, Ba²⁺, Sn²⁺, Zn²⁺ and lanthanoid (Sm²⁺, Eu²⁺, Tm²⁺ and Yb²⁺) and is more preferably at least one selected from the group consisting of Mg²⁺, Ca²⁺, Sr²⁺, Ba²⁺ and Mn²⁺.

The trivalent metal is preferably at least one selected from the group consisting of Al³⁺, Fe³⁺, Cr³⁺, Co³⁺, Mn³⁺, Ti³⁺, Ga³⁺, Sb³⁺, and lanthanoid (La³⁺, Ce³⁺, Pr³⁺, Nd³⁺, Pm³⁺, Sm³⁺, Eu³⁺, Dy³⁺, Ho³⁺, Er³⁺, Tm³⁺, Gd³⁺, Tb³⁺, Yb³⁺ and Lu³⁺) and Bi³⁺ and is more preferably at least one selected from the group consisting of Mn³⁺, La³⁺ and Ce³⁺.

The above ingredients to be added can be used in any of the catalyst particles described in Embodiments 1 to 3. However, for the compound showing an XRD pattern of a fluoride salt of a bivalent or trivalent metal, preferable is a usage mode wherein this compound is additionally dispersed in catalyst particles comprising the above mixture compound of (B) and a crystalline aluminosilicate zeolite in Embodiment 1.

The fluidized catalytic cracking of heavy hydrocarbon oils using the catalyst of the invention can be carried out by any of the known catalytic cracking methods.

At the catalytic cracking of a heavy hydrocarbon oil, a conventional usual FCC catalyst in which a crystalline aluminosilicate zeolite is dispersed in an inorganic oxide matrix can be used in combination as described above. As the crystalline aluminosilicate zeolite and the inorganic oxide matrix in the conventional usual FCC catalyst to be used in combination, those the same as the crystalline aluminosilicate zeolite and the inorganic oxide matrix for use in the invention described above can be used. The amount to be used in combination is desirably an amount so that the total amount of the catalyst of the invention and the conventional usual FCC catalyst to be used in combination satisfies the weight ratio of catalyst/heavy hydrocarbon oil to be described below.

Moreover, the ratio of the individual ingredients, i.e., the compound of (A), the mixture compound of (B) and the crystalline aluminosilicate zeolite in all the catalysts used, i.e., the catalyst of the invention and the conventional usual FCC catalyst desirably becomes the same as the ratio of individual ingredients in all the catalyst particles used in the above Embodiment 1, that is, preferably the ratio comprising from 0.01 to 20 parts by weight of the compound of (A), from 0.01 to 20 parts by weight of the mixture compound of (B), and from 5 to 60 parts by weight of the crystalline aluminosilicate zeolite, and more preferably the ratio comprising from 0.5 to 10 parts by weight of the compound of (A), from 0.5 to 10 parts by weight of the mixture compound of (B), and from 15 to 45 parts by weight of the crystalline aluminosilicate zeolite.

For the catalytic cracking on a commercial scale, there are provided with a cracking reactor and a catalyst regenerator. The catalyst of the invention, optionally together with a conventional usual FCC catalyst in the case that the FCC catalyst is used in combination, is circulated in the above two kinds of vessels. The heated regenerated catalyst supplied from the regenerator is mixed with a heavy hydrocarbon oil and cracks the heavy hydrocarbon oil while the catalyst is led to an upward direction in the cracking reactor. As a result, the catalyst deactivated by the deposition of carbonaceous substance, generally called "coke" on the catalyst is separated from a cracking product and transferred to the regenerator after stripping. The cracking product is separated into dry gas, an LPG fraction, a gasoline fraction, and one or two or more heavy fractions such as a light cycle oil (LCO), a heavy cycle oil (HCO), and a slurry oil. Of course, the cracking reaction can be further promoted by re-circulating the heavy fractions to the reactor. The deactivated catalyst transferred to the regenerator is regenerated by burning the coke precipitated on the surface with air and then the catalyst is again circulated.

As the operating conditions, the pressure is from atmospheric pressure to 5 kg/cm², preferably from normal pressure to 3 kg/cm² and the reaction temperature is from 400°C to 600°C, preferably from 450°C to 550°C. Moreover, the amount of the catalyst to be used is an amount so that the weight ratio of catalyst/heavy hydrocarbon oil becomes from 2 to 20, preferably from 5 to 15.

### Examples

The following will describe the invention more specifically with reference to Examples and Comparative Examples.

### Example 1

(1) Preparation of additive catalyst particles in which a compound of a bivalent metal or a compound of bivalent and trivalent metals showing an XRD pattern of a carbonate of the bivalent metal is dispersed in an inorganic oxide matrix:
   As the above compound of (A), commercially available calcium carbonate was used. When the crystal structure was ascertained using an XRD apparatus, main peaks of the carbonate of the bivalent metal were observed.
   Then, 167 g of alumina (Pural-SB manufactured by Condea) was added to 1.4 Kg of distilled water and the pH was regulated to 3.0 to form an alumina hydrogel slurry, which was thoroughly stirred for 20 minutes. Thereafter, the above calcium carbonate was charged thereto in an amount of 80 g on a dry basis. After about 5 minutes of stirring, the pH was regulated to 8.0 and the whole was stirred for another 10 minutes.
   The resulting slurry was spray-dried under conditions so that the average particle size became about 70 µm and then burned at 400°C for 2 hours in an air-flowing electric furnace to obtain additive catalyst particles P-1 containing the carbonate of the bivalent metal.
   When the composition of the resulting catalyst particles P-1 was measured by ICP analysis, it was ascertained that 40% by weight of the compound of the bivalent metal was contained.
(2) Preparation of catalyst particles in which a mixture compound of aluminum and at least one metal selected from among the Group IVa metals is dispersed in an inorganic oxide matrix together with a crystalline aluminosilicate:
   An aluminum ion aqueous solution was prepared by dissolving 51.6 g of sodium aluminate in 520 g of distilled water. On the other hand, a zirconium ion aqueous solution was prepared by dissolving 20.8 g of zirconium oxychloride octahydrate in 80 g of distilled water.
   These two aqueous solutions were mixed with 100 g of 25% sulfuric acid and the pH was regulated to 7.0, followed by thorough stirring at room temperature for another 1 hour to obtain an alumina-zirconia hydrogel slurry. The gel concentration at that time was 5.2%.
   When the gel was filtrated and an XRD measurement was conducted after burning at 400°C for 2 hour, peaks attributable to crystals of alumina and zirconia were not observed.
   The alumina zirconia hydrogel was filtrated, burned at 400°C for 2 hours and further pulverized in a mill so that the particle size became 15 µm, and thereby a powder of an alumina zirconia mixture compound was obtained. When the composition of the resulting powder was measured by ICP analysis, it was ascertained that the ratio of aluminum and zirconia was 4/1 on an oxide basis.
   Then, catalyst particles in which the resulting alumina zirconia mixture compound was dispersed in an inorganic oxide matrix together with a crystalline aluminosilicate were prepared under conditions so that the content of the alumina zirconia mixture compound in the catalyst became 5% by weight on a dry basis.
   Namely, an acid was added to JIS silicic acid No. 3 water glass to prepare 400 g of a silica hydrosol containing 10% by weight of SiO₂ and then 92.4 g of kaolin clay and 64 g of a crystalline aluminosilicate zeolite (having an SiO₂/Al₂O₃ molar ratio of 5.3, a unit lattice size of 24.49 angstrom, an alkali metal content of 2.0% by weight in terms of oxide, an area ratio in Gauss' functional analysis of Si(2Al) peak relative to the total of whole peak areas in ²⁹Si-MASNMR of 14%, and main X-ray diffraction pattern of zeolite Y) were added thereto on a dry basis. The above alumina zirconia mixture compound powder was further added thereto in an amount of 10 g on a dry basis to obtain a mixed slurry.
   The resulting slurry was spray-dried under conditions so that the average particle size became about 70 µm, and after washing, it was again dried. Further, 150 g of the resulting particles were stirred for 15 minutes in a lanthanum aqueous solution obtained by dissolving 8.7 g of lanthanum nitrate hexahydrate in 2 kg of warm water at 60°C to carry out ion-exchange with a lanthanum ion, and then filtrated and dried to obtain a catalyst C-1 in which a mixture compound of aluminum and one of the Group IVa metals was dispersed in an inorganic oxide matrix together with a crystalline aluminosilicate zeolite.

### Example 2

A catalyst C-2 in which a mixture compound of aluminum and one of the Group IVa metals was dispersed in an inorganic oxide matrix together with a crystalline aluminosilicate zeolite was obtained in the same manner as in (2) of Example 1 with the exception that an alumina zirconia hydrogel slurry which was an precursor of the burned and pulverized alumina zirconia mixture compound powder was used as it was without burning instead of the powder in (2) of Example 1.

### Example 3

A catalyst C-3 in which a mixture compound of aluminum and one of the Group IVa metals was dispersed in an inorganic oxide matrix together with a crystalline aluminosilicate zeolite was obtained in the same manner as in (2) of Example 1 with the exception that 100 g of 25% by weight aqueous solution of titanium sulfate was used instead of 20.8 g of zirconium oxychloride octahydrate in (2) of Example 1. The gel concentration at that time was 5.2%.

When the gel was filtrated and an XRD measurement was conducted after burning at 400°C for 2 hour, peaks attributable to crystals of alumina and titania were not observed.

### Example 4

First, a zirconium ion aqueous solution prepared by dissolving 20.8 g of zirconium oxychloride octahydrate in 80 g of distilled water and 200 g of 25% sulfuric acid were mixed in a state of heating to 40°C. Then, an aluminum ion aqueous solution obtained by dissolving 51.6 g of sodium aluminate in 520 g of distilled water and heated to 40°C was added thereto over a period of 10 minutes. The pH of the gel at that time was 3.3 and the gel concentration was 4.6%.

When the gel was filtrated and an XRD measurement was conducted after burning at 400°C for 2 hour, peaks attributable to crystals of alumina and zirconia were not observed.

Then, catalyst particles in which the resulting alumina zirconia hydrogel was dispersed in an inorganic oxide matrix together with a crystalline aluminosilicate zeolite as in Example 2 was prepared under conditions so that the content of the alumina zirconia mixture compound in the catalyst became 5% by weight on a dry basis, whereby a catalyst C-4 was obtained.

### Comparative Example 1

A catalyst C-5 in which only a crystalline aluminosilicate zeolite was dispersed in an inorganic oxide matrix was obtained in the same manner as in (2) of Example 1 with the exception that the amount of kaolin clay was increased to 103.1 g instead of the use of the alumina zirconia mixture compound powder at the preparation of the catalyst C-1 in (2) of Example 1.

### Comparative Example 2

A catalyst C-6 in which only a crystalline aluminosilicate zeolite was dispersed in an inorganic oxide matrix was obtained in the same manner as in (2) of Example 1 with the exception that a commercially available γ-alumina powder was used instead of the alumina zirconia mixture compound powder at the preparation of the catalyst C-1 in (2) of Example 1.

### Comparative Example 3

A catalyst C-7 in which a mixture compound of aluminum and a metal other than the Group IVa metals was dispersed in an inorganic oxide matrix together with a crystalline aluminosilicate zeolite was obtained in the same manner as in (2) of Example 1 with the exception that 197.6 g of aluminum sulfate hexadecahydrate was used instead of 51.9 g of sodium aluminate and 14.0 g of sodium stannate was used instead of 20.8 g of zirconium oxychloride octahydrate in (2) of Example 1.

When the mixed gel of alumina and tin was filtrated and an XRD measurement was conducted after burning at 400°C for 2 hour, peaks attributable to crystals of alumina and tin were not observed.

### Comparative Example 4

A catalyst C-8 in which a mixture compound of aluminum and a metal other than the Group IVa metals was dispersed in an inorganic oxide matrix together with a crystalline aluminosilicate zeolite was obtained in the same manner as in (2) of Example 1 with the exception that 197.6 g of aluminum sulfate hexadecahydrate was used instead of 51.9 g of sodium aluminate and 14.4 g of potassium antimonate was used instead of 20.8 g of zirconium oxychloride octahydrate in (2) of Example 1.

When the mixed gel of alumina and zirconia was filtrated and an XRD measurement was conducted after burning at 400°C for 2 hour, peaks attributable to crystals of alumina and zirconia were observed.

### Comparative Example 5

First, an aluminum ion aqueous solution prepared by dissolving 51.6 g of sodium aluminate in 520 g of distilled water and 50 g of 25% sulfuric acid were mixed in a state of heating to 40°C. Then, a zirconium ion aqueous solution prepared by dissolving 20.8 g of zirconium oxychloride octahydrate in 80 g of distilled water and heated to 40°C was added thereto over a period of 10 minutes. The pH of the gel at that time was 8.3 and the gel concentration was 5.5%. When the gel was filtrated and an XRD measurement was conducted after burning at 400°C for 2 hour, peaks attributable to crystals of alumina and zirconia were observed.

Then, catalyst particles in which the resulting alumina zirconia hydrogel was dispersed in an inorganic oxide matrix together with a crystalline aluminosilicate zeolite as in Example 2 was prepared under conditions so that the content of the alumina zirconia mixture compound in the catalyst became 5% by weight on a dry basis, whereby a catalyst C-9 was obtained.

### Examples 5 to 8 and Comparative Examples 6 to 10

### [Analytical instruments, analytical conditions, etc.]

The instruments, equations for calculation and the like used in the analyses described above are as follows.

ICP (compositional analysis): "IRIS Advantage" manufactured by Thermo Jarrell Ash

XRD* instrument: "RINT 2500V" manufactured by Rigaku Denki K.K.

* XRD analysis was conducted under the following conditions after the alumina zirconia hydrogel had been filtrated and dried and then burned at 400°C for 2 hours:

XRD measurement conditions: It was measured by an apparatus fitted with a monochrometor. A goniometer was used.
Scanning axis: 2θ/θ
Measuring mode: continuous
Counting unit: counts
Rotation rate of sample: 20 rpm or more, initial angle of 5°, final angle of 90°
Offset: 0
Scanning step: 0.02° or less
Scanning speed: 2°/min or lower
Tube voltage: 50 kV or more
Tube current: 300 mA or more
Fixed slit was used.
Divergence slit: 1°
Scattering slit: 1°
Light-receiving slit: 0.3 mm
X-ray source: (Cu Kα line)

### [MAT activity test]

The catalysts C-1 to C-9 obtained in the above Examples and Comparative Examples and the additive catalyst particles P-1 obtained in the above Example were mixed so that the mixing ratio of P-1 became 10% by weight on a dry basis, and then the activity of the catalysts was evaluated.

The catalytic cracking characteristics of the mixtures of the above catalysts C-1 to C-9 and the additive catalyst particles P-1 were tested on the same hydrocarbon oil under the same reaction conditions using a fixed-bed micro activity test apparatus in accordance with ASTM. Using Vacuum gas oil as a hydrocarbon oil to be cracked, the test conditions were as follows. In this regard, the micro activity test is carried out on a fixed-bed test apparatus and hence the preferable conditions are not necessarily coincident with those in the catalytic cracking on a commercial scale described herein.
Reaction temperature: 500°C
Weight ratio of catalyst/hydrocarbon oil: 2.3, 3.0, 3.8
Test period: 75 seconds

Prior to the test, for simulated equilibration, each catalyst to be tested was treated at 800°C for 6 hours under a 100% steam atmosphere after Ni and V had been supported on the catalyst in amounts of 3000 and 6000 ppm by weight, respectively.

From the results obtained, the test results were compared on the basis of the catalyst/hydrocarbon oil weight ratio of 3.0 for conversion or the conversion of 65% for selectivity. The results are shown in Tables 1 and 2.

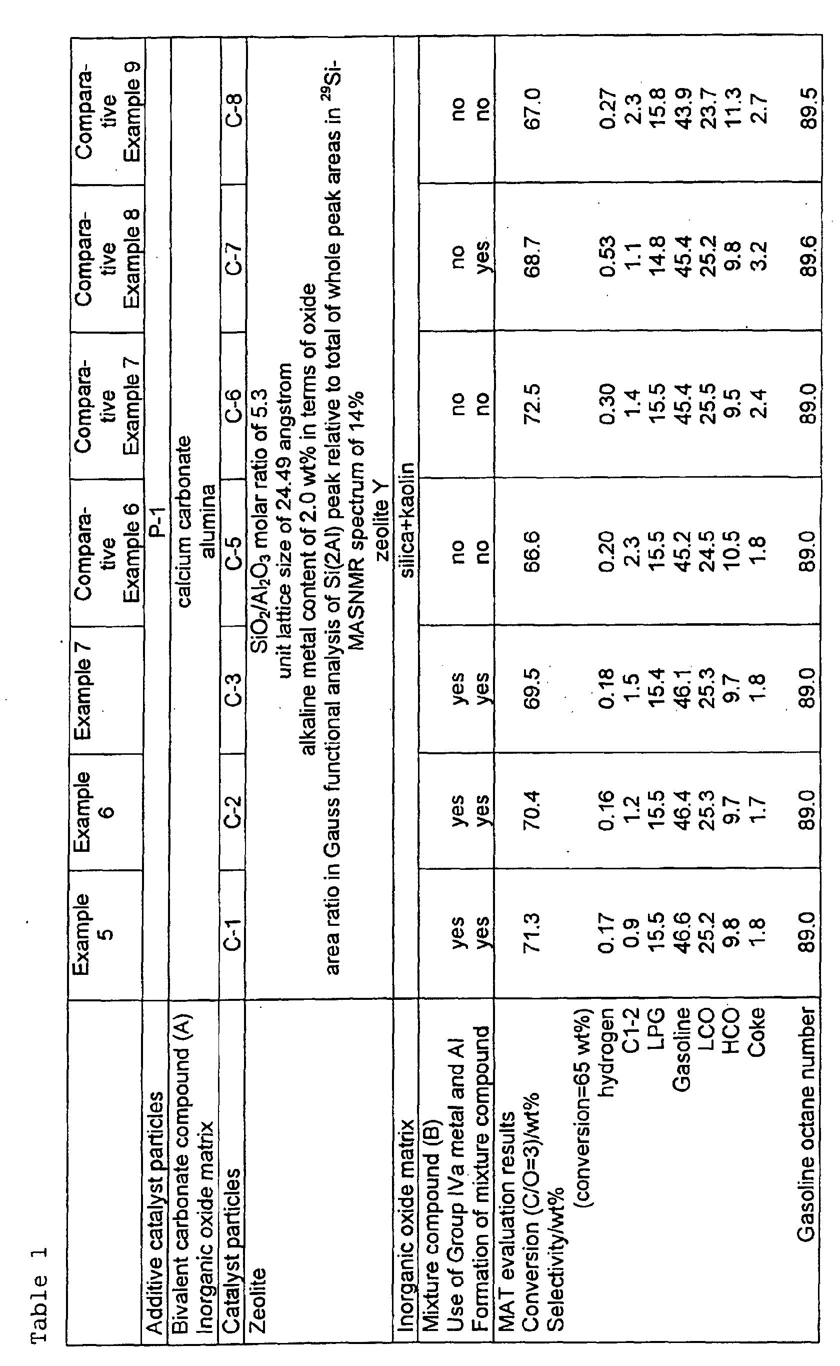

**Table 2**

| | | Example 8 | Comparative Example 10 |
|---|---|---|---|
| Additive catalyst particles | | P-1 | |
| Bivalent carbonate compound (A) Inorganic oxide matrix | | Particles containing calcium carbonate alumina matrix | |
| Catalyst particles | | C-4 | C-9 |
| Zeolite | | the same as Examples 5 to 7 | |
| Inorganic oxide matrix | | silica+kaolin | |
| Mixture compound (B) Use of Group IVa metal and Al | | yes | yes |
| Formation of mixture compound | | yes | no |
| MAT evaluation results Conversion (C/O=3)/wt% Selectivity/wt% | | 71.4 | 70.5 |
| | (conversion=65 wt%) | | |
| | hydrogen | 0.15 | 0.19 |
| | C1-2 | 1.2 | 1.4 |
| | LPG | 15.3 | 15.4 |
| | Gasoline | 46.6 | 45.9 |
| | LCO | 25.6 | 25.5 |
| | HCO | 9.4 | 9.5 |
| | Coke | 1.8 | 2.1 |
| | Gasoline octane number | 89 | 89 |

As is apparent from Tables 1 and 2, the mixtures of the catalysts C-1, C-2, C-3, or C-4 and the additive catalyst P-1 exhibit high conversion reflecting cracking activity, high yields of LCO corresponding gasoline, kerosene and light oil, and low yields of heavy fraction (HCO) as well as no increase of the yields of hydrogen and coke as compared with the mixtures of the catalysts C-5 to C-9 and the additive catalyst P-1. Moreover, the octane number of the gasoline obtained by the cracking reaction is not lowered.

### Comparative Examples 11 and 12

Under conditions in which the additive catalyst P-1 was not mixed, micro activity tests were carried out on the catalysts C-1 and C-5. At that time, the tests were carried out under the same conditions as in Examples 5 to 8 and Comparative Examples 6 to 10 with the exception that supported amounts of Ni and V were changed to 1,000 and 2,000 ppm by weight, respectively in the simulated equilibration prior to the tests.

From the results obtained, the test results were compared on the basis of the catalyst/hydrocarbon oil weight ratio of 3.0 for conversion or the conversion of 65% for selectivity. The results are shown in Table 3.

**Table 3**

| | | Example 5 | Comparative Example 11 | Comparative Example 12 |
|---|---|---|---|---|
| Additive catalyst particles | | P-1 | none | none |
| Catalyst particles | | C-1 | C-5 | C-1 |
| Zeolite | | described in Table 1 | the same as Examples 5 | the same as Examples 5 |
| Inorganic oxide matrix | | silica+ kaolin | silica+ kaolin | silica+ kaolin |
| | Mixture compound | alumina zirconia powder | none | alumina zirconia powder |
| Simulated equilibrium | | 3000/6000 | 1000/2000 | 1000/2000 |
| | Ni/V supported amount/ppm by weight | | | |
| MAT evaluation results Conversion (C/O=3)/wt% Selectivity/wt% | | 71.3 | 67.7 | 69.3 |
| | (conversion=65 wt%) | | | |
| | hydrogen | 0.17 | 0.24 | 0.26 |
| | C1-2 | 0.9 | 2.0 | 2.0 |
| | LPG | 15.5 | 15.0 | 15.0 |
| | Gasoline | 46.6 | 45.7 | 45.4 |
| | LCO | 25.2 | 24.2 | 24.7 |
| | HCO | 9.8 | 10.8 | 10.3 |
| | Coke | 1.8 | 2.1 | 2.3 |
| | Gasoline octane number | 89.0 | 88.4 | 88.5 |

From Table 3, it is understood that in the case of mixing no additive catalyst P-1 comprising a carbonate salt of a bivalent metal, regardless of the presence of the mixture compound composed of one of the Group IVa metals and aluminum, even under very mild conditions for catalysts that Ni and V as contaminant metals are contained in small amounts, the conversion and selectivity are about the same as the values under severe conditions as in Examples 5 to 8, and hence the conversion and selectivity cannot be maintained under the severe conditions as in Examples 5 to 8 when the additive catalyst P-1 comprising a carbonate salt of a bivalent metal is not present.

Furthermore, from Table 3, in the case that only the mixture compound composed of one of the Group IVa metals and aluminum is added to the catalyst without mixing the additive catalyst P-1 comprising a carbonate salt of a bivalent metal, it is understood that the amount of undesirable hydrogen or coke yielded increases.

Accordingly, it is understood that the combined use of the additive catalyst P-1 comprising a carbonate salt of a bivalent metal and the mixture compound composed of one of the Group IVa metals and aluminum improves the conversion and also suppresses the amount of hydrogen and coke yielded.

That is, when catalytic cracking of hydrocarbon oils is carried out using the catalyst for fluidized catalytic cracking according to the invention, satisfactory performances of high cracking activity, suppressed amount of hydrogen or coke yielded, and also high yields of LCO corresponding to kerosene and light oil are exhibited.

### Industrial Applicability

The catalyst for fluidized catalytic cracking or the process for fluidized catalytic cracking according to the invention exhibit remarkably the advantageousness at the cracking of a heavy hydrocarbon oil containing a large amount of catalyst poison metals such as nickel and vanadium. The catalyst or process efficiently deactivates catalyst poison metals and can improve cracking activity with suppressing the amount of hydrogen or coke yielded. Therefore, it is expectable to obtain a gasoline and an LCO fraction corresponding to kerosene and light oil in high yields even when a heavy hydrocarbon oil of low grade is used as a feedstock oil.

## Claims

1. A catalyst for fluidized catalytic cracking of a heavy hydrocarbon oil, which comprises:
(A) catalyst particles comprising a compound of a bivalent metal or a compound of bivalent and trivalent metals, wherein said compound shows an XRD pattern of a carbonate of the bivalent metal, and
(B) catalyst particles comprising a crystalline aluminosilicate zeolite and a mixture compound of aluminum and at least one metal selected from the group consisting of the Group IVa metals of the Periodic Table.

2. The catalyst according to claim 1, wherein (A) the catalyst particles consist of the compound of the component (A).

3. The catalyst according to claim 1, wherein (A) the catalyst particles are catalyst particles comprising the compound of the component (A) dispersed in an inorganic oxide matrix.

4. The catalyst according to claim 1, wherein (A) the catalyst particles are catalyst particles comprising the compound of the component (A) and a crystalline aluminosilicate zeolite dispersed in an inorganic oxide matrix.

5. The catalyst according to any one of claims 1 to 4, wherein (B) the catalyst particles are catalyst particles comprising the mixture compound of (B) and a crystalline aluminosilicate zeolite dispersed in an inorganic oxide matrix.

6. A catalyst for fluidized catalytic cracking of a heavy hydrocarbon oil, which comprises catalyst particles comprising:
(A) a compound of a bivalent metal or a compound of bivalent and trivalent metals, showing an XRD pattern of a carbonate of the bivalent metal,
(B) a mixture compound of aluminum and at least one metal selected from the group consisting of the Group IVa metals of the Periodic Table, and
(C) a crystalline aluminosilicate zeolite.

7. The catalyst according to claim 6, wherein the catalyst particles are catalyst particles comprising the compounds (A) to (C) dispersed in an inorganic oxide matrix.

8. The catalyst according to any one of claims 1 to 7, wherein in the compound of the component (A), the bivalent metal is at least one selected from the group consisting of Mn²⁺, Ca²⁺, Sr²⁺, Ba²⁺ and Sn²⁺, and the trivalent metal is at least one selected from the group consisting of Al³⁺ and Mn³⁺.

9. The catalyst according to any one of claims 1 to 8, wherein in the mixture compound of (B) the component, the Group IVa metal of the Periodic Table is at least one selected from the group consisting of Zr and Ti.

10. The catalyst according to any one of claims 1 to 9, wherein the compound of the component (A) is calcium carbonate.

11. A method of fluidized catalytic cracking of a heavy hydrocarbon oil, which comprises using the catalyst according to any one of claims 1 to 10.

12. The method according to claim 11, which further uses a catalyst for fluidized catalytic cracking obtainable by dispersing a crystalline aluminosilicate zeolite in an inorganic oxide matrix.
